(19) Europäisches Patentamt European Patent Office Office européen des brevets

(11) **EP 4 602 866 B1**

(12) **EUROPEAN PATENT SPECIFICATION**

(45) Date of publication and mention
of the grant of the patent:
**01.07.2026 Bulletin 2026/27**

(51) International Patent Classification (IPC):
**H04W 36/16** *(2009.01)* **H04W 36/00** *(2009.01)*
**G06N 3/0455** *(2023.01)* **G06N 3/098** *(2023.01)*

(21) Application number: **22801454.4**

(52) Cooperative Patent Classification (CPC):
**H04W 36/00835; H04W 36/165;** G06N 3/0455;
G06N 3/098

(22) Date of filing: **12.10.2022**

(86) International application number:
**PCT/EP2022/078432**

(87) International publication number:
**WO 2024/078717 (18.04.2024 Gazette 2024/16)**

(54) **SELECTION OF SERVING TRANSMISSION AND RECEPTION POINT FOR USER EQUIPMENT PARTICIPATING IN FEDERATED LEARNING**

AUSWAHL EINES VERSORGUNGSÜBERTRAGUNGS- UND EMPFANGSPUNKTES FÜR BENUTZERGERÄTE, DIE AN FÖDERIERTEM LERNEN TEILNEHMEN

SÉLECTION DE POINT DE TRANSMISSION ET DE RÉCEPTION DE DESSERTE POUR UN ÉQUIPEMENT UTILISATEUR PARTICIPANT À UN APPRENTISSAGE FÉDÉRÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**20.08.2025 Bulletin 2025/34**

(73) Proprietor: **Telefonaktiebolaget LM Ericsson (publ)**
**164 83 Stockholm (SE)**

(72) Inventors:
• **MOOSAVI, Reza**
**583 33 Linköping (SE)**
• **RYDÉN, Henrik**
**117 27 Stockholm (SE)**
• **LARSSON, Erik, G.**
**586 63 Linköping (SE)**

(74) Representative: **Ericsson**
**Patent Development**
**Torshamnsgatan 21-23**
**164 80 Stockholm (SE)**

(56) References cited:
**WO-A1-2018/127290 US-A1- 2022 116 764**

**Description**

**TECHNICAL FIELD**

Embodiments presented herein relate to a method, a network node, a computer program, and a computer program product for determining serving transmission and reception points for user equipment participating in an over-the-air federated learning process. Embodiments presented herein further relate to a method, a user equipment, a computer program, and a computer program product for assisting determination of the serving transmission and reception point for the user equipment when participating in the over-the-air federated learning process.

**BACKGROUND**

The increasing concerns for data privacy have motivated the consideration of collaborative machine learning (ML) systems with decentralized data where pieces of training data are stored and processed locally by edge user devices, such as user equipment (UE). Federated learning (FL) is one non-limiting example of a decentralized learning topology, where multiple (possible very large number of) agents, for example implemented in UE, participate in training a shared global learning model by exchanging model updates with a centralized parameter server (PS), for example implemented in a network node.

In general terms, FL might be regarded as an ML technique that trains an ML (or artificial intelligence; AI) model across multiple decentralized agents, each performing local model training using local data samples. The technique requires multiple interactions of the model, but no exchange of local data samples. In this respect, an ML, or AI, model might be regarded as a data driven algorithm that applies AI/ML techniques to generate a set of outputs based on a set of inputs. Therefore, AI/ML model training might be regarded as a process to train an AI/ML model by learning the input/output relationship in a data driven manner and obtain the trained AI/ML model for inference. An AI/ML model might be delivered over the air interface; either parameters of a model structure known at the receiving end or a new model with parameters. In this respect, a model download refers to model transfer from the PS to the agents, and model upload refers to model transfer from the agents to the PS.

In further details, FL is an iterative process where each global iteration, often referred to as iteration round, is divided into three phases: In a first phase the PS sends the current model parameter vector to all participating agents. In a second phase each of the agents performs one or several steps of a stochastic gradient descent (SGD) procedure on its own training data based on the current model parameter vector and obtains a model update. In a third phase the model updates from all agents are sent to the PS, which aggregates the received model updates and updates the parameter vector for the next iteration based on the model updates according to some aggregation rule. The first phase is then entered again but with the updated parameter vector as the current model parameter vector.

It will hereinafter be assumed that FL, or a similar iterative learning process, is to be performed between agents placed in UE and a parameter server placed at the network side of a wireless communication network. Some aspects of wireless communication networks will therefore be disclosed next.

Denser wireless communication networks and systems operating on an increasing number of frequency bands are being developed. In the ongoing deployment of the fift generation (5G) telecommunication system, even further densification is needed to be able to reach requirements, which implies that more network nodes are deployed. Denser networks and more frequencies make it more challenging to ensure the best possible assignment of the serving cell and frequency carrier for each served UE.

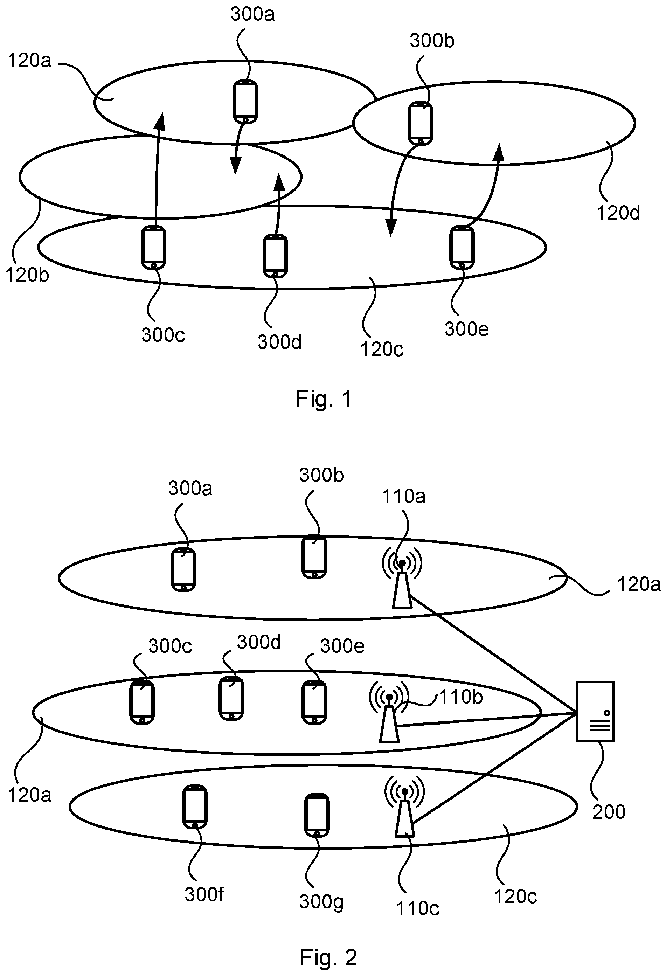

Traffic steering/load balancing is a technique to balance the traffic load between overlaid cells in a network in order to utilize the capacity on the different frequency layers. Reference is here made to **Fig. 1** which schematically illustrates four cells 120a, 120b, 120c, 120d of a communication network. Each cell 120a:120d might be served by a respective transmission and reception point. Alternatively, each transmission and reception point serves two or more cells 120a:120d. Yet alternatively, each cell 120a:120d might be served by two or more transmission and reception point. Fig. 1. Further illustrates UE 300a, 300b, 300c, 300d, 300e served in the cells 120a:120d. Bidirectional arrows indicate potential opportunities for load balancing. The network node assesses the traffic load in the cells 120a:120d. By executing a load balancing algorithm the network node can identify whether there is a need to move UE between the cells 120a:120d (i.e., to move one or more of the UE 300a:300e from one end of its bidirectional arrow to the other end of its bidirectional arrow) in order to balance the traffic load. If there is a need to move the UEs to balance the traffic load, the UEs are selected and instructed to perform inter-frequency measurements. These measurements are then used by the network nodes to direct the UEs to a desired cell using, for example, handover and/or release with redirect procedures.

In case of training an ML model using an iterative learning process where updates are sent over-the-air using analog modulation from the agents in the UE to the parameter server at the network side, the UE are transmitting the model updates over the same time-frequency resources and adapting their transmission to enable the parameter server to retrieve an averaged model update. The efficiency of such an iterative learning process, when the UE are distributed over a large geographic area, is partly dependent on the number of groups of UE that perform model aggregation in each update. For example, a group of UE served in one cell can perform model update in this cell, whilst another group of UE, participating in training the same model, can perform model update in another cell. The parameter server can create an aggregated model based on the updates from both groups of UE and broadcast the update via the serving cell of each UE. This is illustrated in **Fig. 2** which schematically illustrates a communication network having three transmission and reception points 110a, 110b, 100c, each serving its own cell 120a, 120b, 120c. Transmission and reception point 110a is serving UE 300a, 300b in cell 120a, transmission and reception point 110b is serving UE 300c, 300d, 300e in cell 120b, and transmission and reception point 110c is serving UE 300f, 300g in cell 120c. A local update for UE 300a, 300b is thus sent via transmission and reception point 110a, whereas a local update for UE 300c, 300d, 300e is sent via transmission and reception point 110b, and a local update for UE 300f, 300g is sent via transmission and reception point 110c.

In scenario where multiple carrier frequencies are used in neighbouring cells, UEs that due to load balancing configurations by the network are served in neighbouring cells are thus served with different carrier frequencies. This will lead to inefficient utilization of resources for the over-the-air federated learning process in this case one or more of the participating UEs also are in coverage of another cell operating on a different carrier frequency.

Hence, there is still a need for improved over-the-air federated learning.

WO2018127290 A1 is related to deciding about a handover of a UE based on obtained full duplex (FD) capability information of each neighboring base station (BS) of the serving BS and received uplink (UL) channel quality measurement for the UE 101 from all or a subset of neighboring BS.

US2022116764 A1 is related to federated learning and discloses grouping of UEs based on machine learning processing capability reports from the UEs.

## SUMMARY

An object of embodiments herein is to address the above issues by enabling resource-efficient traffic steering in the context of over-the-air federated learning.

According to a first aspect there is presented a claimed method for determining serving transmission and reception points for user equipment participating in an over-the-air federated learning process. The method is performed by a network node. The method comprises obtaining signal quality information for each user equipment in a set of user equipment. The signal quality information pertains to a respective signal quality between each user equipment and transmission and reception point pair for a set of transmission and reception points. The method comprises obtaining an indication from each user equipment. The indication from a given user equipment pertains to whether or not the given user equipment is to participate in the over-the-air federated learning process with a parameter server via one of the transmission and reception points. The method comprises determining which of the user equipment to be served by which of the transmission and reception points when the over-the-air federated learning process is performed based on the obtained signal quality information for each user equipment and the obtained indications from all the user equipment.

According to a second aspect there is presented a claimed network node for determining serving transmission anc reception points for user equipment participating in an over-the-air federated learning process. The network node comprises processing circuitry. The processing circuitry is configured to cause the network node to obtain signal quality information for each user equipment in a set of user equipment. The signal quality information pertains to a respective signal quality between each user equipment and transmission and reception point pair for a set of transmission and reception points. The processing circuitry is configured to cause the network node to obtain an indication from each user equipment. The indication from a given user equipment pertains to whether or not the given user equipment is to participate in the over-the-air federated learning process with a parameter server via one of the transmission and reception points. The processing circuitry is configured to cause the network node to determine which of the user equipment to be served by which of the transmission and reception points when the over-the-air federated learning process is performed based on the obtained signal quality information for each user equipment and the obtained indications from all the user equipment.

According to a third aspect there is presented a network node for determining serving transmission and reception points for user equipment participating in an over-the-air federated learning process. The network node comprises an obtain module configured to obtain signal quality information for each user equipment in a set of user equipment. The signal quality information pertains to a respective signal quality between each user equipment and transmission and reception point pair for a set of transmission and reception points. The network node comprises an obtain module configured to obtain an indication from each user equipment. The indication from a given user equipment pertains to whether or not the given user equipment is to participate in the over-the-air federated learning process with a parameter server via one of the transmission and reception points. The network node comprises a determine module configured to determine which of the user equipment to be served by which of the transmission and reception points when the over-the-air federated learning process is performed based on the obtained signal quality information for each user equipment and the obtained indications from all the user equipment.

According to a fourth aspect there is presented a computer program for determining serving transmission and reception points for user equipment participating in an over-the-air federated learning process, the computer program comprising computer program code which, when run on processing circuitry of a network node, causes the network node to perform a method according to the first aspect.

According to a fifth aspect there is presented a claimed method for assisting determination of serving transmission anc reception point for a user equipment participating in an over-the-air federated learning process. The method is performed by the user equipment. The method comprises providing, towards a network node, radio measurements made by the user equipment on downlink reference signals transmitted by transmission and reception points. The method comprises providing an indication towards the network node that the user equipment is to participate in the over-the-air federated learning process with a parameter server via one of the transmission and reception points. The method comprises obtaining, from the network node, an indication of which of the transmission and reception points that is to serve the user equipment when the over-the-air federated learning process is performed.

According to a sixth aspect there is presented a claimed user equipment for assisting determination of serving transmission and reception point for the user equipment to participate in an over-the-air federated learning process. The user equipment comprises processing circuitry. The processing circuitry is configured to cause the user equipment to provide, towards a network node, radio measurements made by the user equipment on downlink reference signals transmitted by transmission and reception points. The processing circuitry is configured to cause the user equipment to provide an indication towards the network node that the user equipment is to participate in the over-the-air federated learning process with a parameter server via one of the transmission and reception points. The processing circuitry is configured to cause the user equipment to obtain, from the network node, an indication of which of the transmission and reception points that is to serve the user equipment when the over-the-air federated learning process is performed.

According to a seventh aspect there is presented a user equipment for assisting determination of serving transmission and reception point for the user equipment to participate in an over-the-air federated learning process. The user equipment comprises a provide module configured to provide, towards a network node, radio measurements made by the user equipment on downlink reference signals transmitted by transmission and reception points. The user equipment comprises a provide module configured to provide an indication towards the network node that the user equipment is to participate in the over-the-air federated learning process with a parameter server via one of the transmission and reception points. The user equipment comprises an obtan module configured to obtain, from the network node, an indication of which of the transmission and reception points that is to serve the user equipment when the over-the-air federated learning process is performed.

According to an eighth aspect there is presented a computer program for assisting determination of serving transmission and reception point for a user equipment participating in an over-the-air federated learning process, the computer program comprising computer program code which, when run on processing circuitry of the user equipment, causes the user equipment to perform a method according to the fifth aspect.

According to a ninth aspect there is presented a computer program product comprising a computer program according to at least one of the fourth aspect and the eighth aspect and a computer readable storage medium on which the computer program is stored. The computer readable storage medium could be a non-transitory computer readable storage medium.

Advantageously, these aspects provide resource efficient traffic steering of UE for the UE participating in an over-the-air federated learning process.

Advantageously, these aspects enable the optimal transmission and reception points to serve each UE participating in an over-the-air federated learning process to be found.

Advantageously, these aspects improve the resource efficiency of the over-the-air federated learning process, for example by reducing the number of groups the UE are divided into, or by selecting transmission and reception points having low traffic load (thus having available network resources) to serve the UE.

Advantageously, these aspects result inenergy savings and improved bitrate for also for UE not participating in a the over-the-air federated learning process due to an overall more efficient use of network resources.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic illustration of cells according to an example;

Fig. 2 is a schematic illustration of transmission and reception points serving cells according to an example;

Figs. 3 and 4 are flowcharts of methods according to embodiments;

Fig. 5 is a schematic illustration of transmission and reception points serving cells according to embodiments;

Fig. 6 is a signaling diagram of amethod according to embodiments;

Fig. 7 is a schematic diagram showing functional units of a network node according to an embodiment;

Fig. 8 is a schematic diagram showing functional modules of a network node according to an embodiment;

Fig. 9 is a schematic diagram showing functional units of a user equipment according to an embodiment;

Fig. 10 is a schematic diagram showing functional modules of a user equipment according to an embodiment;

Fig. 11 shows one example of a computer program product comprising computer readable means according to an embodiment; and

Fig. 12 is a schematic diagram illustrating a telecommunication network connected via an intermediate network to a host computer in accordance with some embodiments; and

Fig. 13 is a schematic diagram illustrating host computer communicating via a radio base station with a terminal device over a partially wireless connection in accordance with some embodiments.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

The wording that a certain data item, piece of information, etc. is obtained by a first device should be construed as that data item or piece of information being retrieved, fetched, received, or otherwise made available to the first device. For example, the data item or piece of information might either be pushed to the first device from a second device or pulled by the first device from a second device. Further, in order for the first device to obtain the data item or piece of information, the first device might be configured to perform a series of operations, possible including interaction with the second device. Such operations, or interactions, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the first device.

The wording that a certain data item, piece of information, etc. is provided by a first device to a second device should be construed as that data item or piece of information being sent or otherwise made available to the second device by the first device. For example, the data item or piece of information might either be pushed to the second device from the first device or pulled by the second device from the first device. Further, in order for the first device to provide the data item or piece of information to the second device, the first device and the second device might be configured to perform a series of operations in order to interact with each other. Such operations, or interaction, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the second device Further, the wording that a certain data item, piece of information, etc. is sent from a first device to a second device should be construed as that data item or piece of information being sent either directly from the first device to the second device or from the first device to the second device via at least one intermediate device.

It is assumed that UE 300a:300K are to be utilized during an iterative learning process and that the UE 300a:300K as part of performing the iterative learning process are to report computational results to the network node 200. The network node 200 might therefore comprise, be collocated with, or be integrated with, a server entity. Each of the UE 300a:300K comprises, is collocated with, or integrated with, a respective agent. In some aspects, the server entity and the agents are provided in a distributed computing architecture.

Consider a system with one server entity and K agents (i.e, with one agent per UE). The server entity and the agents, via the UE, communicate over a shared medium for which broadcasting is possible, i.e., transmission of information that can be received simultaneously by several UE. A prime example of such a medium is the wireless channel, where techniques such as Long Term Evolution (LTE) and New Radio (NR) and as standardized by the third generation partnership project (3GPP). Henceforth a wireless communication medium is assumed.

The procedure for one iteration round of a learning model that is iteratively trained will be summarized next. First, the server entity broadcasts a parameter vector (which could be differentially to a previously broadcasted model, as detailed below). This parameter vector is assumed to be received by the UE. Each of the UE then computes a local model update based on local training data, and then sends their locally obtained updates to the server entity. Finally, the server entity aggregates all received local updates to update the learning model.

An example of a nominal iterative learning process will be disclosed next. Consider a setup with $K$ UE, and one server entity. Each transmission from the UE is allocated $N$ resource elements (REs). These can be time/frequency samples, or spatial modes.

The server entity updates its estimate of the learning model (maintained as a global model $\theta$ in step S0), as defined by a parameter vector $\theta(i)$, by performing global iterations with an iteration time index $i$. The parameter vector $\theta(i)$ is assumed to be an $N$-dimensional vector. At each iteration $i$, the following steps are performed:

Step S1: The server entity sends the current parameter vector of the learning model, $\theta(i)$, to the UE.

In this respect, there could be different ways in which the current parameter vector of the learning model, $\theta(i)$, is sent to the UE, such as unicast digital transmission, broadcast transmission, or multicast transmission. Some properties of each of these types of transmissions will be disclosed next.

With unicast digital transmission, the server entity allocates orthogonal time, frequency, and/or spatial, resources to each UE . For each UE , a corresponding transmission rate as well as coding and modulation scheme are determined. The model, or a differential update compared to the previously broadcasted model, is quantized and compressed using a source code. For each UE , a modulation and coding scheme is applied, tailored to the rate that the channel to this UE can support. Each UE then decodes the transmission that contains the model (or its differential update).

With broadcast transmission, the server entity transmits in such a way that all UE can decode the model. Since the properties of the radio propagation channel differ for each of the UE , for example resulting in the pathloss being different for the different UE , this can require that the transmission rate is selected very low (using heavy error control coding). An alternative is to use an error control code that can be decoded using only partially received bits. For example, if one uses a channel code (e.g., low density parity check codes; LDPC) with a pseudo-random structure of its parity check matrix, then the UE with small pathloss (and therefore a high received sign al to noise ratio; SNR) may decode the model broadcast after receiving a relatively small number of bits. In contrast, UE with a higher pathloss will have to receive more parity bits before decoding is possible. UE experiencing a comparatively high SNR (compared to other UE) could not only decode the model faster but also start their training computation (e.g., stochastic gradient) earlier, hence enabling a reduction in clock frequency of the computation which in turn results in lower power consumption.

With multicast transmission, the UE can be partitioned in different groups, where one respective uplink pilot resource is assigned per each group. In this way, when beamformed transmission is used, multiple beams can be used, where each beam is adapted to serve a particular group of UE. Multicast transmission might be regarded as a combination of unicast and broadcast techniques and there may be circumstances where such grouping is preferable for performance reasons.

Step S2: Each UE performs a local optimization of the model by running T steps of a stochastic gradient descent update on $\theta(i)$, based on its local training data;

$$\boldsymbol{\theta}_k(i,\tau) = \boldsymbol{\theta}_k(i,\tau-1) - \eta_k \nabla f_k\big(\boldsymbol{\theta}_k(i,\tau-1)\big), \qquad \tau = 1,\dots,T,$$

where $\eta_k$ is a weight and $f_k$ is the objective function used at UE $k$ (and which is based on its locally available training data).

Step S3: Each UE transmits to the server entity their model update $\delta_k(i)$;

$$\boldsymbol{\delta}_k(i) = \boldsymbol{\theta}_k(i,T) - \boldsymbol{\theta}_k(i,0),$$

where $\theta_k(i, 0)$ is the model that UE $k$ received from the server entity.

Step S4: The server entity updates its estimate of the parameter vector $\theta(i)$ by adding to it a linear combination (weighted sum) of the updates received from the UE ;

$$\boldsymbol{\theta}(i+1) = \boldsymbol{\theta}(i) + w_1 \boldsymbol{\delta}_1(i) + w_2 \boldsymbol{\delta}_2(i)$$

where $w_k$ are weights.

Assume now that there are $K$ UE and hence $K$ model updates. When the model updates $\{\delta_1, ..., \delta_K\}$ (where the time index has been dropped for simplicity) from the UE over a wireless communication channel, there are specific benefits of using direct analog modulation. For analog modulation, the $k$:th UE could transmit the $N$ components of $\delta_k$ directly over $N$ resource elements (REs). Here an RE could be, for example: (i) one sample in time in a single-carrier system, or (ii) one subcarrier in one orthogonal frequency-division multiplexing (OFDM) symbol in a multicarrier system, or (iii) a particular spatial beam or a combination of a beam and a time/frequency resource.

One benefit of direct analog modulation is that the superposition nature of the wireless communication channel can be exploited to compute the aggregated update, $\delta_1 + \delta_2 + \cdots + \delta_K$. More specifically, rather than sending $\delta_1, ..., \delta_K$ to the server entity on separate channels, the UE could send the model updates $\{\delta_1, ..., \delta_K\}$ simultaneously, using $N$ REs, through linear analog modulation. The server entity could then exploit the wave superposition property of the wireless communication channel, namely that $\{\delta_1, ..., \delta_K\}$ add up "in the air". Neglecting noise and interference, the server entity would thus receive the linear sum, $\delta_1 + \delta_2 + \cdots + \delta_K$, as desired. That is, the server entity ultimately is interested only in the aggregated model update $\delta_1 + \delta_2 + \cdots + \delta_K$, but not in each individual parameter vector $\{\delta_1, ..., \delta_K\}$. This technique can thus be referred to as iterative learning with over-the-air computation.

The over-the-air computation assumes that appropriate power control is applied (such that all transmissions of $\{\delta_k\}$ are received at the server entity with the same power), and that each transmitted $\delta_k$ is appropriately phase-rotated prior to transmission to pre-compensate for the phase rotation incurred by the channel from UE $k$ to the server entity.

One benefit of the thus described over-the-air computation is the savings of radio resources. With two UE ($K = 2$), 50% resources are saved compared to standard FL since the two UE can send their model updates simultaneously in the same RE. With $K$ UE, only a fraction $1/K$ of the nominally required resources are needed.

As disclosed above, there is still a need for improved over-the-air federated learning.

The embodiments disclosed herein relate to techniques for a network node 200 to determine the serving transmission and reception points 110a:110M for UE 300a:300K participating in an over-the-air federated learning process. The embodiments disclosed herein further relates to a UE 300a:300K assisting the network node 200 for determining the serving transmission and reception point 110a for the UE 300a:300K when the UE 300a:300K participates in the over-the-air federated learning process.

At least some of the embodiments are based on that which of the UE 300a:300K to be served by which of the transmission and reception points 110a:110M when the over-the-air federated learning process is performed based on a combination of radio environment information in terms of signal quality information for each UE 300a:300K on the one hand and indications from the UE 300a:300K whether the UE 300a:300K are to participate in the over-the-air federated learning process. This will, for example, lead to improved efficiency by reducing the number of UE groups performing over-the-air federated learning process.

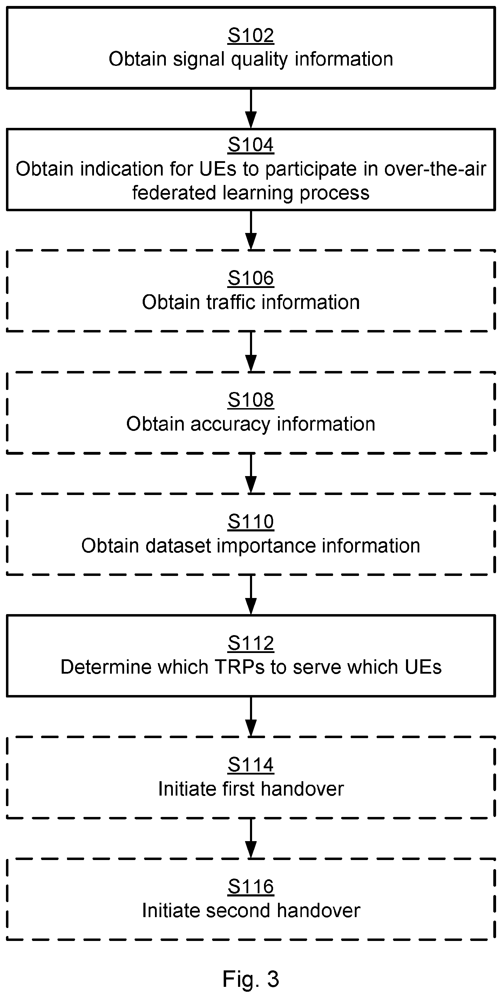

Reference is now made to **Fig. 3** illustrating a method for determining serving transmission and reception points 110a:110M for UE 300a:300K participating in an over-the-air federated learning process as performed by the network node 200 according to an embodiment.

S102: The network node 200 obtains signal quality information for each UE 300a:300K in a set of UE 300a:300K. The signal quality information pertains to a respective signal quality between each UE 300a:300K and transmission and reception point 110a:110M pair for a set of transmission and reception points 110a:110M. S104: The network node 200 obtains an indication from each UE 300a:300K. The indication from a given UE 300a:300K pertains to whether or not this given UE 300a:300K is to participate in the over-the-air federated learning process with a parameter server via one of the transmission and reception points 110a:110M. In this respect, the information might by the network node 200 be obtained as a response to a previous request sent by the network node 200 towards the UE 300a:300K. Hence, some of the UE 300a:300K might respond to the network node 200 that these UE 300a:300K are to participate in the over-the-air federated learning process whereas some other of the UE 300a:300K might respond to the network node 200 that these UE 300a:300K are not to participate in the over-the-air federated learning process (for example where the UE 300a:300K are not equipped with an agent).

S112: The network node 200 determines which of the UE 300a:300K to be served by which of the transmission and reception points 110a:110M when the over-the-air federated learning process is performed based on the obtained signal quality information for each UE 300a:300K and the obtained indications from all the UE 300a:300K. In some aspects, the determining involves selecting which of the UE 300a:300K to be served by which of the transmission and reception points 110a:110M when the over-the-air federated learning process is performed. Hence, the terms determining and selecting can be used interchangeably in this context.

Embodiments relating to further details of determining serving transmission and reception points 110a: 110M for UE 300a:300K participating in an over-the-air federated learning process as performed by the network node 200 will now be disclosed.

In some examples, each of the transmission and reception points 110a:110M is configured to serve its own cell. In some examples, the cells of at least two different transmission and reception points 110a:110M have mutually different carrier frequencies. In some examples, two or more of the transmission and reception points 110a:110M are co-located.

In some aspects, before starting the over-the-air federated learning process, during an initial phase, the UE 300a:300K might from the network node 200 receive a configuration indicating instruction for performing inter-frequency carrier measurements. The measurement procedures will be disclosed in further detail below.

Aspects of ow the network node 200 in step S102 might obtain the signal quality information will be disclosed next.

In some aspects, the UE 300a:300K provide, to the network node 200, signal quality measurements of the transmission and reception points 110a:110M that are candidates for participating in the over-the-air federated learning process. For example, each transmission and reception point 110a:110M that serves a UE 300a:300K can configure inter-frequency measurements for the carriers intended for over-the-air federated learning process. Hence, in some embodiments, the signal quality information is obtained from radio measurements made by the UE 300a:300K on downlink reference signals transmitted by the transmission and reception points 110a:110M and/or from radio measurements made by the transmission and reception points 110a:110M on uplink reference signals transmitted by the UE 300a:300K. In further detail, to perform measurements, a UE 300a:300K may generally measure om reference signals transmitted by a transmission and reception point 110a:110M, e.g., to assess the quality of the transmission beams in which the reference signals are transmitted. In general, the reference signals transmitted by at least one transmission and reception point 110a:110M to the UE 300a:300K may comprise at least one of a channel state information reference signal (CSI-RS), a synchronization signal block (SSB), a primary synchronization signal (PSS), a secondary synchronization signal (SSS), and a cell-specific reference signal (CRS). Further, the UE 300a:300K might assess the signal quality in terms of reference sigal received power (RSRP) or reference signal received quality (RSRQ). More specifically, a UE 300a:300K may assess beam qualities via measurements on the SSB (e.g., corresponding to a Synchronization Signal/Physical Broadcast Channel (PBCH) block) in a 5G (e.g., NR) network, or via measurements on the CSI-RS resources in a 5G (e.g., NR) network or a 4G (e.g., LTE) network. The information to the network node 200 might by the UE 300a:300K via its serving transmission and reception point 110a:110M and then from the transmission and reception points 110a:110M over the XN interface to the network node 200.

In some aspects, the network node 200 predicts the signal qualities of the the UE 300a:300K. Hence, in some embodiments, the signal quality information is obtained from signal quality predictions made by the network node 200 or from signal quality predictions provided to the network node 200. In some non-limiting examples, this is accomplished using secondary carrier prediction (SCP) which presents a model to predict other carriers, or radio access technology (RAT) radio conditions based on measurements that are readily available or acquirable on a source carrier. The use of this method can give a radio location of each UE 300a:300K, and enable UE cell signal quality estimates for another frequency to be estimated. The expected signal quality can comprise the RSRP estimation/measurement for the candidate transmission and reception point 110a:110M. Another method to find the UE signal quality estimates on a candidate transmission and reception point 110a:110M operating at another carrier frequency is based on the geographical location of the UE 300a:300K. For example, it might be expected that a UE 300a:300K in vicinity of a candidate transmission and reception point 110a:110M has have higher predicted signal quality than a UE 300a:300K far away from the same candidate transmission and reception point 110a:110M. The positions of the UE 300a:300K can be estimated by any of available LTE/NR positioning procedure, that is, Assisted Global Navigation Satellite System (A-GNSS), observation arrival time difference (OTODA), uplink - time difference of arrival (UTDOA), and enhanced cell identity (E-CID) techniques.

Based on the measured or predicted signal qualities of the UE 300a:300K, the network node 200 might request more information from the candidate transmission and reception point 110a:110M that are hearable for the UE 300a:300K participating in the over-the-air federated learning process. Examples of this information will be provided next.

According to a first example, the information comprises traffic information. Hence, in some embodiments, the network node 200 is configured to perform (optional) step S106.

S106: The network node 200 obtains traffic information. The traffic information pertains to any of: number of UE 300a:300K currently served, or a forecast of number of UE 300a:300K to be served, by each transmission and reception point 110a:110M, traffic load of each transmission and reception point 110a:110M, available resources at each transmission and reception point 110a:110M for participating in the over-the-air federated learning process. Which of the UE 300a:300K to be served by which of the transmission and reception points 110a:110M can then be determined also based on the traffic information. The traffic information might thus pertain to the number of served UE 300a:300K, or the forecasted number of served UE 300a:300K. The traffic information might further pertain to the load of these UE 300a:300K (either forecasted or actually served). The load might pertain to the resources (e.g. physical resource blocks (PRB) or subframes). The transmission and reception points 110a:110M might also provide an estimate of the number of time-frequency resources that can be spent for over-the-air federated learning process.

According to a second example, the information comprises hardware information. The hardware information might pertain to how accurately the transmission and reception point 110a:110M can estimate the channel to each UE 300a:300K, or related to other impairments, such as phase noise. Hence, in some embodiments, the network node 200 is configured to perform (optional) step S108.

S108: The network node 200 obtains accuracy information. The accuracy information pertains to a level of accuracy of channel estimation of the UE 300a:300K as made by each of the transmission and reception points 110a:110M. Which of the UE 300a:300K to be served by which of the transmission and reception points 110a:110M can then be determined also based on the accuracy information.

According to a third example, the information comprises link qualities to the UE 300a:300K.

The UE 300a:300K might further indicate its dataset importance to the network node 200. Hence, in some embodiments, each UE 300a:300K that is to participate in the over-the-air federated learning process is configured to perform training on a local dataset as part of the over-the-air federated learning process. The network node 200 might take this information into account when determining which of the user equipment 300a:300K to be served by which of the transmission and reception points 110a:110M. The importance, or description, can for example include the statistics of its response variable, the number of data samples etc. Therefore, in some embodiments, the network node 200 is configured to perform (optional) step S110.

S110: The network node 200 obtains dataset importance information from the UE 300a:300K,. The dataset importance information pertains to a level of uniqueness per each local dataset. The dataset importance information might pertain either to information that directly indicates datset importance, or information that can be used by the network node 200 to deduce the dataset importance. Which of the UE 300a:300K to be served by which of the transmission and reception points 110a:110M can then be determined also based on the dataset importance information.

As an example, in a heterogenous-data scenario given UE 300a:300K might have access to very unique data, so that this given UE 300a:300K should not be ignored in the learning process. As a non-limiting illustrative example, consider a federated learning process involving handwritten digit recognition with 100 participating UE 300a:300K. If 99 of the UE 300a:300K have access to samples of the digits "0"-"8" but only one single UE 300a:300K has access to the digit "9" then is important that the results provided by this UE 300a:300K are received by the network node 200 during the federated learning process.

Aspects of ow the network node 200 in step S112 might determine which of the user equipment 300a:300K to be served by which of the transmission and reception points 110a:110M will be disclosed next.

One criterion is to minimize the number of handovers. That is, the transmission and reception points 110a:110M (cells) are selected to which most of the UE 300a:300K are already connected. Hence, in some embodiments, prior to determining which of the UE 300a:300K to be served by which of the transmission and reception points 110a:110M, the UE 300a:300K are served by initial transmission and reception points 110a:110M in the set of transmission and reception points 110a:110M. Which of the UE 300a:300K to be served by which of the transmission and reception points 110a:110M can then be determined according to a handover criterion to reduce number of handovers from the initial transmission and reception points 110a:110M.

One criterion is to select the transmission and reception points 110a:110M such that the signal quality for all UE 300a:300K are above a certain threshold for each transmission and reception point 110a:110M. Signal quality here may refer to signal-to-noise ratio (SNR) or signal-to-noise and interference ratio (SINR) . Signal quality can further mean a statistical characterization of link blocking probability, for example, parameterized in terms of a block probability or a Markov chain (with parameters of a Gilbert-Elliot model as one possible instance).

One criterion is to select transmission and reception points 110a:110M considering the time-variability of the wireless channel, for example quantified in terms of channel coherence time (Doppler frequency) since this ultimately might decide how the UE 300a:300K have to adapted their transmissions for the over-the-air federated learning process. Transmission and reception points 110a:110M for which the wireless channels to the UE 300a:300K vary more slowly are easier to adapt to, and hence such transmission and reception points 110a:110M might be preferred in the selection.

One criterion is to select the transmission and reception points 110a:110M that have appropriate processing capability (for example, enough antennas with digital processing as appropriate) to support over-the-air federated learning process transmission by the UE 300a:300K. For example, transmission and reception points 110a:110M with few or a single antennas may benefit more from over-the-air federated learning process transmission than a multiple-antenna (MIMO) transmission and reception point 110a:110M since the MIMO transmission and reception point 110a:110M can offer conventional spatial multiplexing of the UE 300a:300K in the same resource blocks. Hence, in some embodiments each of the transmission and reception points 110a:110M has a processing capability for participating in the over-the-air federated learning process, and which of the UE 300a:300K to be served by which of the transmission and reception points 110a:110M is determined based on the processing capability of each transmission and reception point 110a:110M.

One criterion is to select the transmission and reception points 110a:110M with most resources available for over-the-air federated learning process (e.g. the transmission and reception points 110a:110M that have least number of served UE 300a:300K).

One criterion is to select the transmission and reception points 110a:110M that minimizes the number of needed groups of UE 300a:300K. Hence, in some embodiments, which of the UE 300a:300K to be served by which of the transmission and reception points 110a:110M is determined according to a selection criterion to reduce a total number of transmission and reception points 110a:110M needed to serve the UE 300a:300K.

One criterion is to select the transmission and reception points 110a:110M where the UE 300a:300K with most unique datasets have their best path gain. One example of this is the above disclosed heterogenous-data scenario. That is, as above, each UE 300a:300K that is to participate in the over-the-air federated learning process might be configured to perform training on a local dataset as part of the over-the-air federated learning process, where each local dataset has a respective level of uniqueness, and where the signal quality reflects path gains between the UE 300a:300K and the transmission and reception points 110a:110M. The UE 300a:300K with local datasets having highest levels of uniqueness might then be determined to be served by the transmission and reception points 110a:110M to which the path gain is highest. Additionally or alternatively, the UE 300a:300K with highest requirments on energy efficiency might be determined to be served by the transmission and reception points 110a:110M to which the path gain is highest.

As disclosed above, prior to determining which of the UE 300a:300K to be served by which of the transmission and reception points 110a:110M, the UE 300a:300K might be served by initial transmission and reception points 110a:110M in the set of transmission and reception points 110a:110M. Therefore, once the decision is made, i.e., when it has been determined which of the UE 300a:300K to be served by which of the transmission and reception points 110a:110M, corresponding configuration might be sent to the UE 300a:300K. This migh include instructions for some of the UE 300a:300K to initiate a handover to a target cell. Hence, in some embodiments, the network node 200 is configured to perform (optional) step S114.

S114: The network node 200 initiates a first handover for each UE 300a:300K that is determined to be served by another transmission and reception points 110a:110M than its initial transmission and reception point 110a.

Once the over-the-air federated learning process is completed, some of the UE 300a:300K might, optionally, be instructed to return to its previous serving cell. This configuration can be sent a priori, for example during the initial phase. Hence, in some embodiments, the network node 200 is configured to perform (optional) step S116.

S116: The network node 200 initiates, upon the over-the-air federated learning process having been terminated, a second handover back to the initial transmission and reception points 110a:110M for each UE 300a:300K for which the first handover was performed.

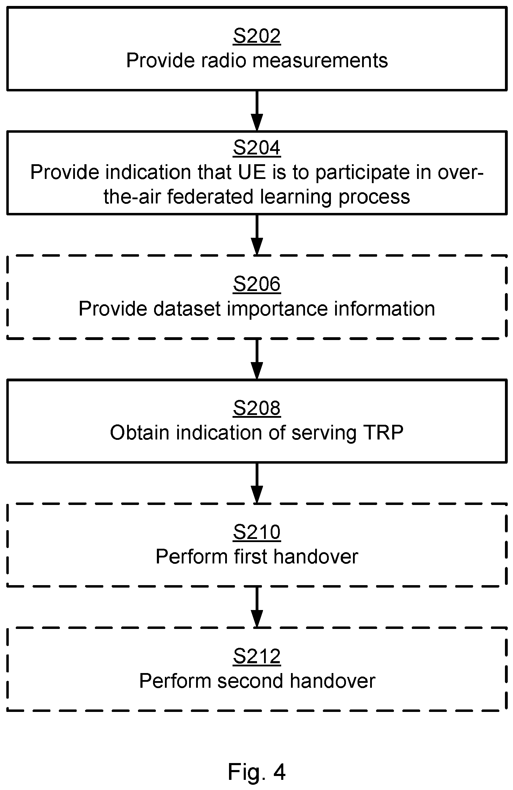

Reference is now made to **Fig. 4** illustrating a method for a UE 300a:300K to assist in determination of the serving transmission and reception point 110a for the UE 300a:300K when participating in the over-the-air federated learning process according to an embodiment.

S202: The UE 300a:300K provides, towards the network node 200, radio measurements made by the UE 300a:300K on downlink reference signals transmitted by transmission and reception points 110a:110M.

S204: The UE 300a:300K provides an indication towards the network node 200 that the UE 300a:300K is to participate in the over-the-air federated learning process with a parameter server via one of the transmission and reception points 110a:110M.

S208: The UE 300a:300K obtains, from the network node 200, an indication of which of the transmission and reception points 110a:110M that is to serve the UE 300a:300K when the over-the-air federated learning process is performed.

Embodiments relating to further details of assisting determination of serving transmission and reception point 110a as performed by the UE 300a:300K will now be disclosed.

The UE 300a:300K is configured to perform training on a local dataset as part of the over-the-air federated learning process. As disclosed above, the UE 300a:300K might further indicate its dataset importance to the network node 200. Hence, in some embodiments the UE 300a:300K is configured (optional) step S206.

S206: The UE 300a:300K provides dataset importance information towards the network node 200. The dataset importance information pertains to a level of uniqueness of the local dataset.

As disclosed above, prior to obtaining the indication of which of the transmission and reception points 110a:110M that is to serve the UE 300a:300K, the UE 300a:300K is served by an initial transmission and reception point 110a. As also disclosed above, some of the UE 300a:300K might be instructed to initiate a handover to a target cell. Hence, in some embodiments the UE 300a:300K is configured (optional) step S210.

S210: The UE 300a:300K performs a first handover for the UE 300a:300K to be served by another transmission and reception points 110a:110M than its initial transmission and reception point 110a when the over-the-air federated learning process is performed.

As disclosed above, once the over-the-air federated learning process is completed, some of the UE 300a:300K might, optionally, be instructed to return to its previous serving cell. Hence, in some embodiments the UE 300a:300K is configured (optional) step S212.

S212: The UE 300a:300K performs , upon the over-the-air federated learning process having been terminated, a second handover back to the initial transmission and reception point 110a.

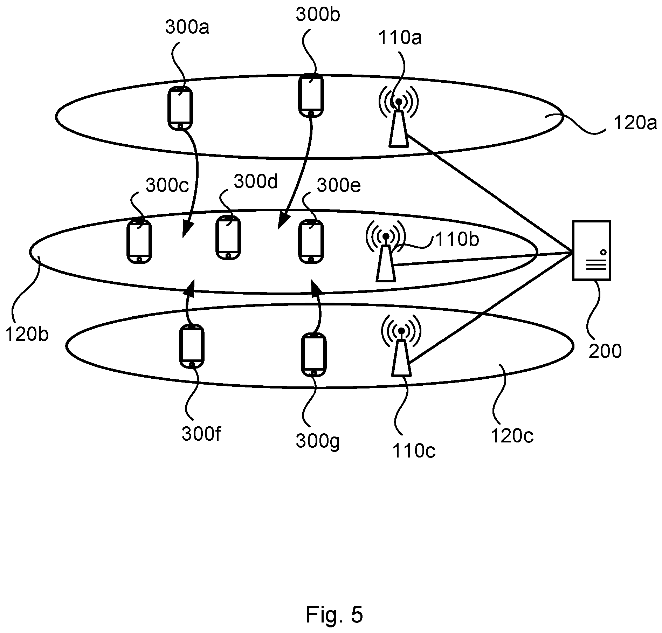

Reference is next made to **Fig. 5** which schematically illustrates a communication network having three transmission and reception points 110a, 110b, 100c, each serving its own cell 120a, 120b, 120c. Initially, transmission and reception point 110a is serving UEs 300a, 300b in cell 120a, transmission and reception point 110b is serving UEs 300c, 300d, 300e in cell 120b, and transmission and reception point 110c is serving UEs 300f, 300g in cell 120c. From a pure traffic information point-of-view, this might be the optimal allocation for which transmission and reception point to serve which UE. However, when also taking into account that the UEs 300a:300g are to participate in an over-the-air federated learning process, it might be better to let transmission and reception point 110b serve all the UEs 300a:300g. Handover might therefore be initiated for UEs 300a, 300b, 300f, 300g to transmission and reception point 110b.

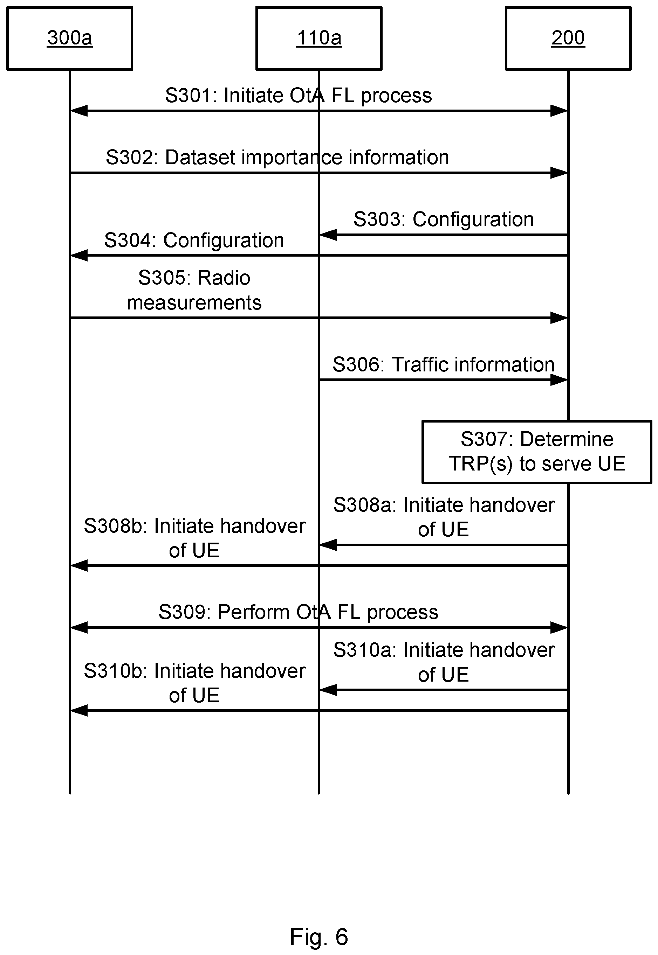

One particular embodiments for determining a serving transmission and reception point 110a for a UE 300a participating in an over-the-air federated learning process will be disclosed next with reference to the signalling diagram of **Fig. 6.** It is here assumed that one agent is co-located with the UE 300a and parameter server is co-located with the the network node 200. Reference will thus be made to the UE 300a and te network node 200 instead of the agent and the parameter server.

S301: The over-the-air federated learning (OtA FL) process is initiated between the UE 300a and the network node 200. The UE 300a thereby also indicates that it will participate in the over-the-air federated learning process with the parameter server. The UE 300a is initially served by an initial transmission and reception point.

S302: The UE 300a provides dataset importance information towards the network node 200.

S303: The network node 200 provides configuration to a group of transmission and reception points 110a:110M pertaining to instructions to transmit downlink reference signals. The group of transmission and reception points 110a:110M defines candidate transmission and reception points 110a:110M for serving the UE 300a.

S304: The UE 300a receives configuration from the network node 200 pertaining to instructions for performing radio measurements on downlink reference signals transmitted from a group of transmission and reception points 110a:110M.

S305: The UE 300a obtains radio measurements by measuring on the downlink reference signals and provides the radio measurements as signal quality information towards the network node 200.

S306: The network node 200 obtains traffic information from the group of transmission and reception points 110a:110M.

S307: The network node 200 determines which of the transmission and reception points (TRP(s)) 110a:110M that is to server the UE 300a when the over-the-air federated learning process is performed based on the obtained signal quality information and the obtained traffic information (and the fact that the UE 300a will participate in the over-the-air federated learning process with the parameter server).

S308a, S308b: The network node 200 initiates handover of the UE 300a from the initial transmission and reception point to the transmission and reception point 110a selected to serve the UE 300a during the over-the-air federated learning process.

S309: The over-the-air federated learning process is performed.

S310a, S310b: The network node 200 initiates handover of the UE 300a back to the initial transmission and reception point from the selected initial transmission and reception point.

Non-limiting examples of scenarios where the herein disclosed embodiments can be applied will be disclosed next.

According to a first example, the computational task pertains to prediction of best secondary carrier frequencies to be used by UE 300a:300K. The data locally obtained by the UE 300k can then represent a measurement on a serving carrier of the UE 300k. In this respect, the best secondary carrier frequencies for a UE 300a:300K can be predicted based on their measurement reports on the serving carrier. The secondary carrier frequencies as reported thus defines the computational result. In order to enable such techniques, the UE 300a:300K can be trained by the network node 200, where each UE 300k, according to the machine learning model, takes as input the measurement reports on the serving carrier(s) (among possibly other available reports such as timing advance, etc.) and as outputs a prediction of whether the UE 300a:300K has coverage or not in the secondary carrier frequency.

According to a second example, the computational task pertains to compressing channel-state-information using an auto-encoder, where the network node 200 implements a decoder of the auto-encoder, and where each of the UE 300a:300K, according to the machine learning model, implements a respective encoder of the auto-encoder. An autoencoder can be regarded as a type of neural network used to learn efficient data representations.

According to a third example, the computational task pertains to signal quality drop prediction. The signal quality drop prediction is based on measurements on wireless links used by the UE 300a:300K. In this respect, based on received data, in terms of computational results, in the reports, the network node 200 can learn, for example, what sequence of signal quality measurements (e.g., reference signal received power; RSRP) that results in a large signal quality drop. After a machine learning model is trained, for instance using the iterative learning process, the network node 200 can provide the model to the UE 300a:300K. The model can be provided either to UE 300a:300K having taken part in the training, or to other UE 300a:300K. The UE 300a:300K can then apply the model to predict future signal quality values. This signal quality prediction can then be used in the context of any of: initiating inter-frequency handover, setting handover and/or reselection parameters, changing device scheduler priority so as to schedule the UE 300a:300K when the expected signal quality is good. The data for training such a model is located at the UE-side, and hence an iterative learning process as disclosed herein can be used to efficiently learn the future signal quality prediction.

According to a fourth example, the iterative learning procedure concerns mapping one or more geolocations to a radio signal quality values, or bitrate values. This can be used by the network node 200 to create an understanding of potential network coverage holes in a cell, and how the bitrate varies within the cell. However, a device-reported geolocation can violate privacy concerns of the UE 300a:300K, and therefore an iterative learning procedure can be used since it only comprises signaling of parameter vectors. As an illustrative example assume that UE 300a:300K have a dataset of geolocation to Signal-to-Interference-plus-Noise Ratio (SINR) mappings according to a respective area (where the SINR takes a normalized value from 0 to 1). The UE 300a:300K then perform an iterative learning procedure with the network node 200 in order to include their dataset information in a global machine learning model to be used by the network.

According to a fifth example, the iterative learning procedure concerns surveillance, using a network of cameras, of a particular area public or private). Each camera is associated with its own UE 300a:300K. The network is configured to learn a global machine learning model that can be used to detect whether suspicious activity is ongoing in any of the video imagery as captured by the cameras. The suspicious activity could pertain to identifying unauthorized persons present in a private area, identifying vehicles in the area, or monitoring the area for any criminal activity. The cameras however, for privacy reasons, are not allowed to share their raw image data. An iterative learning procedure can then be used to train the global machine learning model, where the cameras share only model (gradient) updates in terms of parameter vectors, rather than their observations. In this case the parameter vectors might represent predictions of the content in the images (for examples, parameters of a face recognition algorithm).

According to a sixth example, the iterative learning procedure concerns a natural language processing application. The UE 300a:300K could learn a language model that represents a machine learning model, for example for text prediction when typing on a UE 300a:300K, such as a mobile device, or mart phone. Using an iterative learning procedure, only updates to the model need to be shared, but raw text data will not be shared.

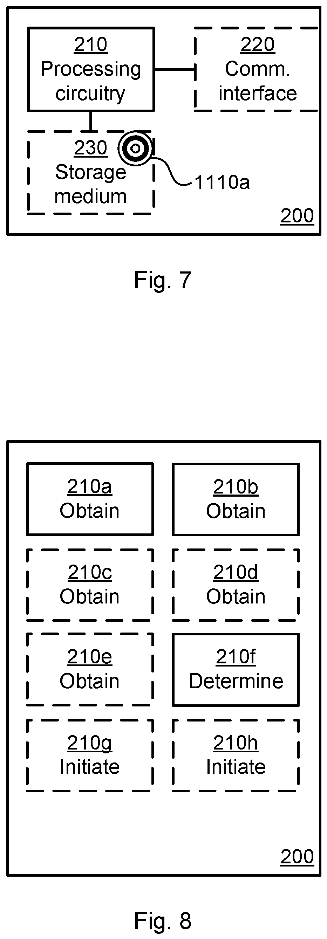

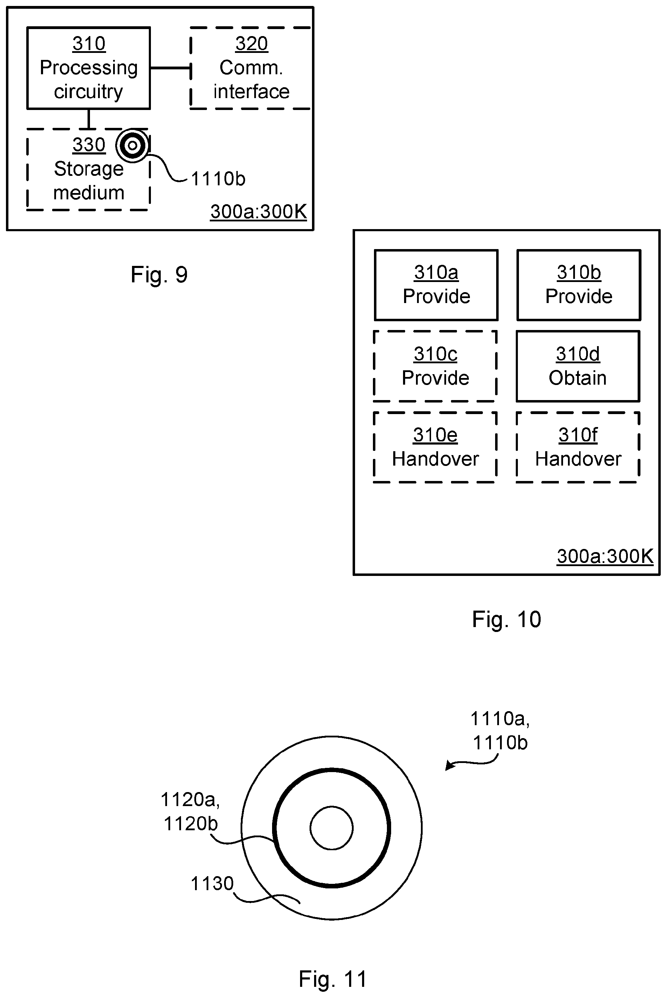

**Fig. 7** schematically illustrates, in terms of a number of functional units, the components of a network node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1110a (as in Fig. 11), e.g. in the form of a storage medium 230. The processing circuitry 210 may further be provided as at least one application specific integrated circuit (ASIC), or field programmable gate array (FPGA).

Particularly, the processing circuitry 210 is configured to cause the network node 200 to perform a set of operations, or steps, as disclosed above. For example, the storage medium 230 may store the set of operations, and the processing circuitry 210 may be configured to retrieve the set of operations from the storage medium 230 to cause the network node 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The network node 200 may further comprise a communications interface 220 for communications with other entities, functions, nodes, and devices, such as the UE 300a:300K and the transmission and reception points 110a:110M either directly or indirectly. As such the communications interface 220 may comprise one or more transmitters and receivers, comprising analogue and digital components.

The processing circuitry 210 controls the general operation of the network node 200 e.g. by sending data and control signals to the communications interface 220 and the storage medium 230, by receiving data and reports from the communications interface 220, and by retrieving data and instructions from the storage medium 230. Other components, as well as the related functionality, of the network node 200 are omitted in order not to obscure the concepts presented herein.

**Fig. 8** schematically illustrates, in terms of a number of functional modules, the components of a network node 200 according to an embodiment. The network node 200 of Fig. 8 comprises a number of functional modules; an obtain module 210a configured to perform step S102, an obtain module 210b configured to perform step S104, and a determine module 210f configured to perform step S112. The network node 200 of Fig. 8 may further comprise a number of optional functional modules, such as any of an obtain module 210c configured to perform step S106, an obtain module 210d configured to perform step S108, an obtain module 210e configured to perform step S110, an initiate module 210g configured to perform step S114, and an initiate module 210h configured to perform step S116.

In general terms, each functional module 210a:210h may be implemented in hardware or in software. Preferably, one or more or all functional modules 210a:210h may be implemented by the processing circuitry 210, possibly in cooperation with the communications interface 220 and/or the storage medium 230. The processing circuitry 210 may thus be arranged to from the storage medium 230 fetch instructions as provided by a functional module 210a:210h and to execute these instructions, thereby performing any steps of the network node 200 as disclosed herein.

The network node 200 may be provided as a standalone device or as a part of at least one further device. For example, the network node 200 may be provided in a node of the radio access network or in a node of the core network. Alternatively, functionality of the network node 200 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time. Thus, a first portion of the instructions performed by the network node 200 may be executed in a first device, and a second portion of the instructions performed by the network node 200 may be executed in a second device; the herein disclosed embodiments are not limited to any particular number of devices on which the instructions performed by the network node 200 may be executed. Hence, the methods according to the herein disclosed embodiments are suitable to be performed by a network node 200 residing in a cloud computational environment. Therefore, although a single processing circuitry 210 is illustrated in Fig. 7, the processing circuitry 210 may be distributed among a plurality of devices, or nodes. The same applies to the functional modules 210a:210h of Fig. 8 and the computer program 1120a of Fig. 11.

**Fig. 9** schematically illustrates, in terms of a number of functional units, the components of a UE 300a:300K according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1110b (as in Fig. 11), e.g. in the form of a storage medium 330. The processing circuitry 310 may further be provided as at least one application specific integrated circuit (ASIC), or field programmable gate array (FPGA).

Particularly, the processing circuitry 310 is configured to cause the UE 300a:300K to perform a set of operations, or steps, as disclosed above. For example, the storage medium 330 may store the set of operations, and the processing circuitry 310 may be configured to retrieve the set of operations from the storage medium 330 to cause the UE 300a:300K to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The UE 300a:300K may further comprise a communications interface 320 for communications with other entities, functions, nodes, and devices, such as the network node 200 and the transmission and reception points 110a:110M either directly or indirectly. As such the communications interface 320 may comprise one or more transmitters and receivers, comprising analogue and digital components.

The processing circuitry 310 controls the general operation of the UE 300a:300K e.g. by sending data and control signals to the communications interface 320 and the storage medium 330, by receiving data and reports from the communications interface 320, and by retrieving data and instructions from the storage medium 330. Other components, as well as the related functionality, of the UE 300a:300K are omitted in order not to obscure the concepts presented herein.

**Fig. 10** schematically illustrates, in terms of a number of functional modules, the components of a UE 300a:300K according to an embodiment. The UE 300a:300K of Fig. 10 comprises a number of functional modules; a provide module 310a configured to perform step S202, a provide module 310b configured to perform step S204, and an obtain module 310d configured to perform step S208. The UE 300a:300K of Fig. 10 may further comprise a number of optional functional modules, such as any of a provide module 310c configured to perform step S206, a handover module 310e configured to perform step 2S10, and a handover module 310f configured to perform step S212.

In general terms, each functional module 310a:310f may be implemented in hardware or in software. Preferably, one or more or all functional modules 310a:310f may be implemented by the processing circuitry 310, possibly in cooperation with the communications interface 320 and/or the storage medium 330. The processing circuitry 310 may thus be arranged to from the storage medium 330 fetch instructions as provided by a functional module 310a:310f and to execute these instructions, thereby performing any steps of the UE 300a:300K as disclosed herein.

**Fig. 11** shows one example of a computer program product 1110a, 1110b comprising computer readable means 1130. On this computer readable means 1130, a computer program 1120a can be stored, which computer program 1120a can cause the processing circuitry 210 and thereto operatively coupled entities and devices, such as the communications interface 220 and the storage medium 230, to execute methods according to embodiments described herein. The computer program 1120a and/or computer program product 1110a may thus provide means for performing any steps of the network node 200 as herein disclosed. On this computer readable means 1130, a computer program 1120b can be stored, which computer program 1120b can cause the processing circuitry 310 and thereto operatively coupled entities and devices, such as the communications interface 320 and the storage medium 330, to execute methods according to embodiments described herein. The computer program 1120b and/or computer program product 1110b may thus provide means for performing any steps of the UE 300a:300K as herein disclosed.

In the example of Fig. 11, the computer program product 1110a, 1110b is illustrated as an optical disc, such as a CD (compact disc) or a DVD (digital versatile disc) or a Blu-Ray disc. The computer program product 1110a, 1110b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1120a, 1120b is here schematically shown as a track on the depicted optical disk, the computer program 1120a, 1120b can be stored in any way which is suitable for the computer program product 1110a, 1110b.

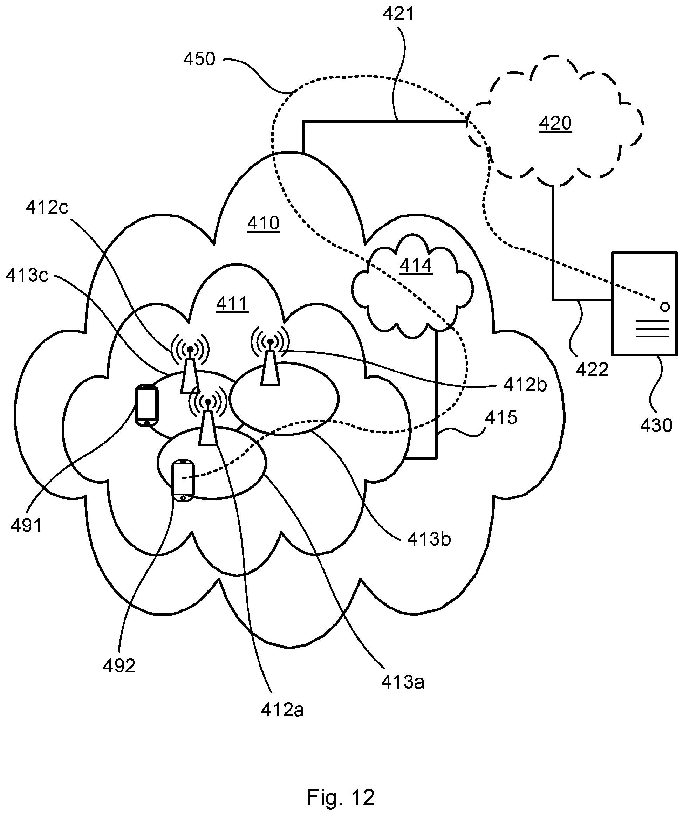

**Fig. 12** is a schematic diagram illustrating a telecommunication network connected via an intermediate network 420 to a host computer 430 in accordance with some embodiments. In accordance with an embodiment, a communication system includes telecommunication network 410, such as a 3GPP-type cellular network, which comprises access network 411, and core network 414. Access network 411 comprises a plurality of radio access network nodes 412a, 412b, 412c, such as NBs, eNBs, gNBs (each corresponding to the network node 200) or other types of wireless access points, each defining a corresponding coverage area, or cell, 413a, 413b, 413c. Each radio access network nodes 412a, 412b, 412c is connectable to core network 414 over a wired or wireless connection 415. A first UE 491 located in coverage area 413c is configured to wirelessly connect to, or be paged by, the corresponding network node 412c. A second UE 492 in coverage area 413a is wirelessly connectable to the corresponding network node 412a. While a plurality of UE 491, 492 are illustrated in this example, the disclosed embodiments are equally applicable to a situation where a sole UE is in the coverage area or where a sole terminal device is connecting to the corresponding network node 412. The UEs 491, 492 correspond to UE 300a:300K.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Fig. 12 as a whole enables connectivity between the connected UEs 491, 492 and host computer 430. The connectivity may be described as an over-the-top (OTT) connection 450. Host computer 430 and the connected UEs 491, 492 are configured to communicate data and/or signalling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, network node 412 may not or need not be informed about the past routing of an incoming downlink communication with data originating from host computer 430 to be forwarded (e.g., handed over) to a connected UE 491. Similarly, network node 412 need not be aware of the future routing of an outgoing uplink communication originating from the UE 491 towards the host computer 430.

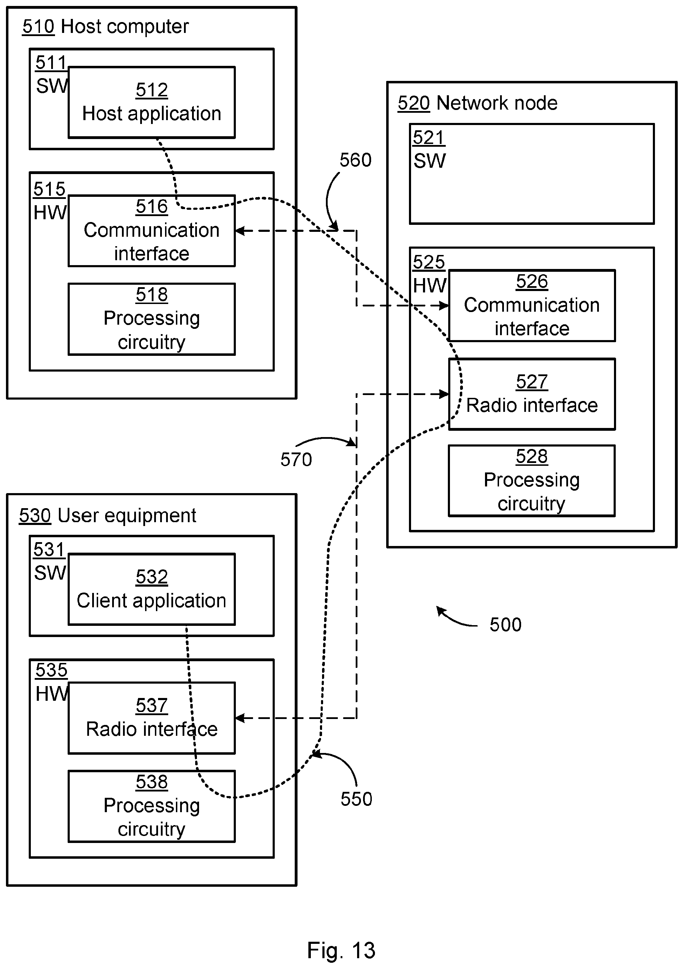

**Fig. 13** is a schematic diagram illustrating host computer communicating via a radio access network node with a UE over a partially wireless connection in accordance with some embodiments. Example implementations, in accordance with an embodiment, of the UE, radio access network node and host computer discussed in the preceding paragraphs will now be described with reference to Fig. 13. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. The UE 530 corresponds to the UE 300a:300K. In providing the service to the remote user, host application 512 may provide user data which is transmitted using OTT connection 550.

Communication system 500 further includes radio access network node 520 provided in a telecommunication system and comprising hardware 525 enabling it to communicate with host computer 510 and with UE 530. The radio access network node 520 corresponds to the network node 200. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Fig. 13) served by radio access network node 520. Communication interface 526 may be configured to facilitate connection 560 to host computer 510. Connection 560 may be direct or it may pass through a core network (not shown in Fig. 13) of the telecommunication system and/or through one or more intermediate networks outside the telecommunication system. In the embodiment shown, hardware 525 of radio access network node 520 further includes processing circuitry 528, which may comprise one or more programmable processors, application-specific integrated circuits, field programmable gate arrays or combinations of these (not shown) adapted to execute instructions. Radio access network node 520 further has software 521 stored internally or accessible via an external connection.

Communication system 500 further includes UE 530 already referred to. Its hardware 535 may include radio interface 537 configured to set up and maintain wireless connection 570 with a radio access network node serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, radio access network node 520 and UE 530 illustrated in Fig. 13 may be similar or identical to host computer 430, one of network nodes 412a, 412b, 412c and one of UEs 491, 492 of Fig. 12, respectively. This is to say, the inner workings of these entities may be as shown in Fig. 13 and independently, the surrounding network topology may be that of Fig. 12.

In Fig. 13, OTT connection 550 has been drawn abstractly to illustrate the communication between host computer 510 and UE 530 via network node 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and radio access network node 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may reduce interference, due to improved classification ability of airborne UEs which can generate significant interference.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect network node 520, and it may be unknown or imperceptible to radio access network node 520. Such procedures and functionalities may be known and practiced in the art. In certain embodiments, measurements may involve proprietary UE signalling facilitating host computer's 510 measurements of throughput, propagation times, latency and the like. The measurements may be implemented in that software 511 and 531 causes messages to be transmitted, in particular empty or 'dummy' messages, using OTT connection 550 while it monitors propagation times, errors etc.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1.    A method for determining serving transmission and reception points (110a:110M) for user equipment (300a:300K) participating in an over-the-air federated learning process, the method being performed by a network node (200), the method comprising:

obtaining (S102) signal quality information for each user equipment (300a:300K) in a set of user equipment (300a:300K), wherein the signal quality information pertains to a respective signal quality between each user equipment (300a:300K) and transmission and reception point (110a:110M) pair for a set of transmission and reception points (110a:110M);

obtaining (S104) an indication from each user equipment (300a:300K), wherein the indication from a given user equipment (300a:300K) pertains to whether or not said given user equipment (300a:300K) is to participate in the over-the-air federated learning process with a parameter server via one of the transmission and reception points (110a:110M); and

determining (S112) which of the user equipment (300a:300K) to be served by which of the transmission and reception points (110a:110M) when the over-the-air federated learning process is performed based on the obtained signal quality information for each user equipment (300a:300K) and the obtained indications from all the user equipment (300a:300K).

2. The method according to claim 1, wherein each of the transmission and reception points (110a:110M) is configured to serve its own cell.

3. The method according to claim 2, wherein the cells of at least two different transmission and reception points (110a:110M) have mutually different carrier frequencies.

4. The method according to claim 1, wherein the signal quality information is obtained from radio measurements made by the user equipment (300a:300K) on downlink reference signals transmitted by the transmission and reception points (110a:110M) and/or from radio measurements made by the transmission and reception points (110a:110M) on uplink reference signals transmitted by the user equipment (300a:300K).

5. The method according to claim 1, wherein the signal quality information is obtained from signal quality predictions made by the network node (200) or from signal quality predictions provided to the network node (200).

6. The method according to claim 1, wherein the method further comprises:

obtaining (S106) traffic information, wherein the traffic information pertains to any of: number of user equipment (300a:300K) currently served, or a forecast of number of user equipment (300a:300K) to be served, by each transmission and reception point (110a:110M), traffic load of each transmission and reception point (110a:110M), available resources at each transmission and reception point (110a:110M) for participating in the over-the-air federated learning process, and

wherein which of the user equipment (300a:300K) to be served by which of the transmission and reception points (110a:110M) is determined also based on the traffic information.

7. The method according to claim 1, wherein the method further comprises:

obtaining (S108) accuracy information, wherein the accuracy information pertains to a level of accuracy of channel estimation of the user equipment (300a:300K) as made by each of the transmission and reception points (110a:110M), and

wherein which of the user equipment (300a:300K) to be served by which of the transmission and reception points (110a:110M) is determined also based on the accuracy information.

8. The method according to claim 1, wherein each user equipment (300a:300K) that is to participate in the over-the-air federated learning process is configured to perform training on a local dataset as part of the over-the-air federated learning process, wherein the method further comprises:

obtaining (S110) dataset importance information from the user equipment (300a:300K), wherein the dataset importance information pertains to a level of uniqueness per each local dataset, and

wherein which of the user equipment (300a:300K) to be served by which of the transmission and reception points (110a:110M) is determined also based on the dataset importance information.

9. The method according to claim 1, wherein, prior to determining which of the user equipment (300a:300K) to be served by which of the transmission and reception points (110a:110M), the user equipment (300a:300K) are served by initial transmission and reception points (110a:110M) in the set of transmission and reception points (110a:110M), and wherein which of the user equipment (300a:300K) to be served by which of the transmission and reception points

(110a:110M) is determined according to a handover criterion to reduce number of handovers from the initial transmission and reception points (110a:110M).

10. The method according to claim 1, wherein each of the transmission and reception points (110a:110M) has a processing capability for participating in the over-the-air federated learning process, and
wherein which of the user equipment (300a:300K) to be served by which of the transmission and reception points (110a:110M) is determined based on the processing capability of each transmission and reception point (110a:110M).

11. The method according to claim 1, wherein which of the user equipment (300a:300K) to be served by which of the transmission and reception points (110a:110M) is determined according to a selection criterion to reduce a total number of transmission and reception points (110a:110M) needed to serve the user equipment (300a:300K).

12. A method for assisting determination of serving transmission and reception point (110a) for a user equipment (300a:300K) participating in an over-the-air federated learning process, the method being performed by the user equipment (300a:300K), the method comprising:

providing (S202), towards a network node (200), radio measurements made by the user equipment (300a:300K) on downlink reference signals transmitted by transmission and reception points (110a:110M);
providing (S204) an indication towards the network node (200) that the user equipment (300a:300K) is to participate in the over-the-air federated learning process with a parameter server via one of the transmission and reception points (110a:110M); and
obtaining (S208), from the network node (200), an indication of which of the transmission and reception points (110a:110M) that is to serve the user equipment (300a:300K) when the over-the-air federated learning process is performed.

13. The method according to claim 12, wherein the user equipment (300a:300K) is configured to perform training on a local dataset as part of the over-the-air federated learning process, and wherein the method further comprises:
providing (S206) dataset importance information towards the network node (200), wherein the dataset importance information pertains to a level of uniqueness of the local dataset.

14. A network node (200) for determining serving transmission and reception points (110a:110M) for user equipment (300a:300K) participating in an over-the-air federated learning process, the network node (200) comprising processing circuitry (210), the processing circuitry being configured to cause the network node (200) to:

obtain signal quality information for each user equipment (300a:300K) in a set of user equipment (300a:300K), wherein the signal quality information pertains to a respective signal quality between each user equipment (300a:300K) and transmission and reception point (110a:110M) pair for a set of transmission and reception points (110a:110M);
obtain an indication from each user equipment (300a:300K), wherein the indication from a given user equipment (300a:300K) pertains to whether or not said given user equipment (300a:300K) is to participate in the over-the-air federated learning process with a parameter server via one of the transmission and reception points (110a:110M); and
determine which of the user equipment (300a:300K) to be served by which of the transmission and reception points (110a:110M) when the over-the-air federated learning process is performed based on the obtained signal quality information for each user equipment (300a:300K) and the obtained indications from all the user equipment (300a:300K).

15. A user equipment (300a:300K) for assisting determination of serving transmission and reception point (110a) for the user equipment (300a:300K) to participate in an over-the-air federated learning process, the user equipment (300a:300K) comprising processing circuitry (310), the processing circuitry being configured to cause the user equipment (300a:300K) to:

provide, towards a network node (200), radio measurements made by the user equipment (300a:300K) on downlink reference signals transmitted by transmission and reception points (110a:110M);
provide an indication towards the network node (200) that the user equipment (300a:300K) is to participate in the over-the-air federated learning process with a parameter server via one of the transmission and reception points (110a:110M); and
obtain, from the network node (200), an indication of which of the transmission and reception points (110a:110M)

that is to serve the user equipment (300a:300K) when the over-the-air federated learning process is performed.

**Patentansprüche**

1. Verfahren zum Bestimmen bedienender Sende- und Empfangspunkte (110a:110M) für eine Benutzereinrichtung (300a:300K), die an einem Over-the-Air-Federated-Learning-Prozess teilnimmt, wobei das Verfahren von einem Netzwerkknoten (200) durchgeführt wird, wobei das Verfahren umfasst:

   Erhalten (S102) von Signalqualitätsinformationen für jede Benutzereinrichtung (300a:300K) in einer Menge von Benutzereinrichtungen (300a:300K), wobei sich die Signalqualitätsinformationen auf eine jeweilige Signalqualität zwischen jeder Benutzereinrichtung (300a:300K) und einem Paar aus Sende- und Empfangspunkt (110a:110M) für eine Menge von Sende- und Empfangspunkten (110a:110M) beziehen;
   Erhalten (S104) einer Anzeige von jeder Benutzereinrichtung (300a:300K), wobei sich die Anzeige einer gegebenen Benutzereinrichtung (300a:300K) darauf bezieht, ob die gegebene Benutzereinrichtung (300a:300K) zur Teilnahme an dem Over-the-Air-Federated-Learning-Prozess mit einem Parameter-Server über einen der Sende- und Empfangspunkte (110a:110M) vorgesehen ist oder nicht; und
   Bestimmen (S112), welche der Benutzereinrichtungen (300a:300K) von welchen der Sende- und Empfangspunkte (110a:110M) zu bedienen ist, wenn der Over-the-Air-Federated-Learning-Prozess durchgeführt wird, basierend auf den erhaltenen Signalqualitätsinformationen für jede Benutzereinrichtung (300a:300K) und den erhaltenen Anzeigen von allen Benutzereinrichtungen (300a:300K).

2. Verfahren nach Anspruch 1, wobei jeder der Sende- und Empfangspunkte (110a:110M) dazu konfiguriert ist, seine eigene Zelle zu bedienen.

3. Verfahren nach Anspruch 2, wobei die Zellen von mindestens zwei unterschiedlichen Sende- und Empfangspunkten (110a:110M) in Bezug aufeinander unterschiedliche Trägerfrequenzen aufweisen.

4. Verfahren nach Anspruch 1, wobei die Signalqualitätsinformationen aus Funkmessungen erhalten werden, die von den Benutzereinrichtungen (300a:300K) an Downlink-Referenzsignalen durchgeführt werden, die von den Sende- und Empfangspunkten (110a:110M) übertragen werden, und/oder aus Funkmessungen, die von den Sende- und Empfangspunkten (110a:110M) an Uplink-Referenzsignalen durchgeführt werden, die von den Benutzereinrichtungen (300a:300K) übertragen werden.

5. Verfahren nach Anspruch 1, wobei die Signalqualitätsinformationen aus Signalqualitätsvorhersagen erhalten werden, die vom Netzwerkknoten (200) erstellt werden, oder aus Signalqualitätsvorhersagen, die dem Netzwerkknoten (200) bereitgestellt werden.

6. Verfahren nach Anspruch 1, wobei das Verfahren ferner umfasst:

   Erhalten (S106) von Verkehrsinformationen, wobei sich die Verkehrsinformationen auf eines beziehen aus: Anzahl der Benutzereinrichtungen (300a:300K), die derzeit von jedem Sende- und Empfangspunkt (110a:110M) bedient werden, oder eine Prognose einer Anzahl von Benutzereinrichtungen (300a:300K), die von diesem zu bedienen sind, Verkehrslast jedes Sende- und Empfangspunkts (110a:110M), verfügbaren Ressourcen an jedem Sende- und Empfangspunkt (110a:110M) für die Teilnahme am Over-the-Air-Federated-Learning-Prozess, und
   wobei auch basierend auf den Verkehrsinformationen bestimmt wird, welche der Benutzereinrichtungen (300a:300K) von welchen der Sende- und Empfangspunkte (110a:110M) zu bedienen ist.

7. Verfahren nach Anspruch 1, wobei das Verfahren ferner umfasst:

   Erhalten (S108) von Genauigkeitsinformationen, wobei sich die Genauigkeitsinformationen auf ein Genauigkeitsniveau einer Kanalschätzung der Benutzereinrichtung (300a:300K) beziehen, wie sie von jedem der Sende- und Empfangspunkte (110a:110M) durchgeführt wird, und
   wobei ebenfalls basierend auf den Genauigkeitsinformationen bestimmt wird, welche der Benutzereinrichtungen (300a:300K) von welchen der Sende- und Empfangspunkte (110a:110M) zu bedienen ist.

8. Verfahren nach Anspruch 1, wobei jede Benutzereinrichtung (300a:300K), die zur Teilnahme an dem Over-the-Air-Federated-Learning-Prozess vorgesehen ist, dazu konfiguriert ist, ein Training auf einem lokalen Datensatz als Teil des Over-the-Air-Federated-Learning-Prozesses durchzuführen, wobei das Verfahren ferner umfasst:

Erhalten (S110) von Datensatz-Wichtigkeitsinformationen von den Benutzereinrichtungen (300a:300K), wobei sich die Datensatz-Wichtigkeitsinformationen auf ein Maß an Einzigartigkeit pro jeweiligem lokalem Datensatz beziehen, und
wobei auch basierend auf den Datensatz-Wichtigkeitsinformationen bestimmt wird, welche der Benutzereinrichtungen (300a:300K) von welchen der Sende- und Empfangspunkte (110a:110M) zu bedienen sind.

9. Verfahren nach Anspruch 1, wobei vor dem Bestimmen, welche der Benutzereinrichtungen (300a:300K) von welchen der Sende- und Empfangspunkte (110a:110M) zu bedienen sind, die Benutzereinrichtungen (300a:300K) von initialen Sende- und Empfangspunkten (110a:110M) in der Menge von Sende- und Empfangspunkten (110a:110M) bedient werden, und
wobei gemäß einem Handover-Kriterium zur Reduzierung der Anzahl von Handovern von den initialen Sende- und Empfangspunkten (110a:110M) bestimmt wird, welche der Benutzereinrichtungen (300a:300K) von welchen der Sende- und Empfangspunkte (110a:110M) zu bedienen sind.

10. Verfahren nach Anspruch 1, wobei jeder der Sende- und Empfangspunkte (110a:110M) eine Verarbeitungsfähigkeit zur Teilnahme am Over-the-Air-Federated-Learning-Prozess aufweist, und
wobei , basierend auf der Verarbeitungsfähigkeit jedes Sende- und Empfangspunkts (110a:110M) bestimmt wird, welche der Benutzereinrichtungen (300a:300K) von welchen der Sende- und Empfangspunkte (110a:110M) zu bedienen sind.

11. Verfahren nach Anspruch 1, wobei gemäß einem Auswahlkriterium zur Reduzierung einer Gesamtanzahl von Sende- und Empfangspunkten (110a:110M), die benötigt werden, um die Benutzereinrichtungen (300a:300K) zu bedienen, bestimmt wird, welche der Benutzereinrichtungen (300a:300K) von welchen der Sende- und Empfangspunkte (110a:110M) zu bedienen sind.

12. Verfahren zum Unterstützen des Bestimmen eines bedienenden Sende- und Empfangspunkts (110a) für eine Benutzereinrichtung (300a:300K), die an einem Over-the-Air-Federated-Learning-Prozess teilnimmt, wobei das Verfahren von der Benutzereinrichtung (300a:300K) durchgeführt wird, wobei das Verfahren umfasst:

Bereitstellen (S202) von Funkmessungen an einen Netzwerkknoten (200), die von der Benutzereinrichtung (300a:300K) an Downlink-Referenzsignalen durchgeführt wurden, die von Sende- und Empfangspunkten (110a:110M) übertragen werden;
Bereitstellen (S204) einer Anzeige an den Netzwerkknoten (200), dass die Benutzereinrichtung (300a:300K) zur Teilnahme an dem Over-the-Air-Federated-Learning-Prozess mit einem Parameter-Server über einen der Sende- und Empfangspunkte (110a:110M) vorgesehen ist; und
Erhalten (S208) von dem Netzwerkknoten (200) einer Anzeige, welcher der Sende- und Empfangspunkte (110a:110M) zum Bedienen der Benutzereinrichtung (300a:300K) vorgesehen ist, wenn der Over-the-Air-Federated-Learning-Prozess durchgeführt wird.

13. Verfahren nach Anspruch 12, wobei die Benutzereinrichtung (300a:300K) dazu konfiguriert ist, ein Training an einem lokalen Datensatz als Teil des Over-the-Air-Federated-Learning-Prozesses durchzuführen, und wobei das Verfahren ferner umfasst:
Bereitstellen (S206) von Datensatz-Wichtigkeitsinformationen an den Netzwerkknoten (200), wobei sich die Datensatz-Wichtigkeitsinformationen auf ein Maß an Einzigartigkeit des lokalen Datensatzes beziehen.

14. Netzwerkknoten (200) zum Bestimmen bedienender Sende- und Empfangspunkte (110a:110M) für Benutzereinrichtungen (300a:300K), die an einem Over-the-Air-Federated-Learning-Prozess teilnehmen, wobei der Netzwerkknoten (200) eine Verarbeitungsschaltung (210) umfasst, wobei die Verarbeitungsschaltung dazu konfiguriert ist, den Netzwerkknoten (200) dazu zu veranlassen:

Erhalten von Signalqualitätsinformationen für jede Benutzereinrichtung (300a:300K) in einer Menge von Benutzereinrichtungen (300a:300K), wobei sich die Signalqualitätsinformationen auf eine jeweilige Signalqualität zwischen jeder Benutzereinrichtung (300a:300K) und einem Paar aus Sende- und Empfangspunkt (110a:110M) für eine Menge von Sende- und Empfangspunkten (110a:110M) beziehen;
Erhalten einer Anzeige von jeder Benutzereinrichtung (300a:300K), wobei sich die Anzeige einer gegebenen Benutzereinrichtung (300a:300K) darauf bezieht, ob die gegebene Benutzereinrichtung (300a:300K) zur Teilnahme an dem Over-the-Air-Federated-Learning-Prozess mit einem Parameter-Server über einen der Sende- und Empfangspunkte (110a:110M) vorgesehen ist oder nicht; und

Bestimmen, welche der Benutzereinrichtungen (300a:300K) von welchen der Sende- und Empfangspunkte (110a:110M) zu bedienen ist, wenn der Over-the-Air-Federated-Learning-Prozess durchgeführt wird, basierend auf den erhaltenen Signalqualitätsinformationen für jede Benutzereinrichtung (300a:300K) und den erhaltenen Anzeigen von allen Benutzereinrichtungen (300a:300K).

15. Benutzereinrichtung (300a:300K) zur Unterstützung des Bestimmens eines bedienenden Sende- und Empfangspunkts (110a) für die Benutzereinrichtung (300a:300K) zur Teilnahme an einem Over-the-Air-Federated-Learning-Prozess, wobei die Benutzereinrichtung (300a:300K) eine Verarbeitungsschaltung (310) umfasst, wobei die Verarbeitungsschaltung dazu konfiguriert ist, die Benutzereinrichtung (300a:300K) dazu zu veranlassen:

Bereitstellen von Funkmessungen an einen Netzwerkknoten (200), die von der Benutzereinrichtung (300a:300K) an Downlink-Referenzsignalen durchgeführt wurden, die von Sende- und Empfangspunkten (110a:110M) übertragen werden;

Bereitstellen einer Anzeige an den Netzwerkknoten (200), dass die Benutzereinrichtung (300a:300K) zur Teilnahme an dem Over-the-Air-Federated-Learning-Prozess mit einem Parameter-Server über einen der Sende- und Empfangspunkte (110a:110M) vorgesehen ist; und

Erhalten von dem Netzwerkknoten (200) einer Anzeige, welcher der Sende- und Empfangspunkte (110a:110M) zum Bedienen der Benutzereinrichtung (300a:300K) vorgesehen ist, wenn der Over-the-Air-Federated-Learning-Prozess durchgeführt wird.

**Revendications**

1. Procédé de détermination de points de transmission et de réception de desserte (110a:110M) pour un équipement utilisateur (300a:300K) participant à un processus d'apprentissage fédéré par voie hertzienne, le procédé étant réalisé par un nœud de réseau (200), le procédé comprenant :

l'obtention (S102) d'informations de qualité de signal pour chaque équipement utilisateur (300a:300K) dans un ensemble d'équipements utilisateurs (300a:300K), dans lequel les informations de qualité de signal concernent une qualité de signal respective entre chaque paire d'équipement utilisateur (300a:300K) et de point de transmission et de réception (110a:110M) pour un ensemble de points de transmission et de réception (110a:110M) ;

l'obtention (S104) d'une indication provenant de chaque équipement utilisateur (300a:300K), dans lequel l'indication provenant d'un équipement utilisateur (300a:300K) donné concerne le fait que ledit équipement utilisateur (300a:300K) donné doit ou non participer au processus d'apprentissage fédéré par voie hertzienne avec un serveur de paramètres via l'un des points de transmission et de réception (110a:110M) ; et

la détermination (S112) de quel équipement utilisateur (300a:300K) doit être desservi par quel point de transmission et de réception (110a:110M) lorsque le processus d'apprentissage fédéré par voie hertzienne est réalisé sur la base des informations de qualité de signal obtenues pour chaque équipement utilisateur (300a:300K) et des indications obtenues provenant de tous les équipements utilisateurs (300a:300K).

2. Procédé selon la revendication 1, dans lequel chacun des points de transmission et de réception (110a:110M) est configuré pour desservir sa propre cellule.

3. Procédé selon la revendication 2, dans lequel les cellules d'au moins deux points de transmission et de réception (110a:110M) différents ont des fréquences porteuses mutuellement différentes.

4. Procédé selon la revendication 1, dans lequel les informations de qualité de signal sont obtenues à partir de mesures radio effectuées par l'équipement utilisateur (300a:300K) sur des signaux de référence de liaison descendante transmis par des points de transmission et de réception (110a:110M) et/ou à partir de mesures radio effectuées par les points de transmission et de réception (110a:110M) sur des signaux de référence de liaison montante transmis par l'équipement utilisateur (300a:300K).

5. Procédé selon la revendication 1, dans lequel les informations de qualité de signal sont obtenues à partir de prédictions de qualité de signal effectuées par le nœud de réseau (200) ou à partir de prédictions de qualité de signal fournies au nœud de réseau (200).

6. Procédé selon la revendication 1, le procédé comprenant en outre :

l'obtention (S106) d'informations de trafic, dans lequel les informations de trafic concernent l'un quelconque parmi : un nombre d'équipements utilisateurs (300a:300K) actuellement desservis, ou une prévision d'un nombre d'équipements utilisateurs (300a:300K) devant être desservis, par chaque point de transmission et de réception (110a: 110M), une charge de trafic de chaque point de transmission et de réception (110a:110M), des ressources disponibles au niveau de chaque point de transmission et de réception (110a:110M) pour participer au processus d'apprentissage fédéré par voie hertzienne, et

dans lequel quel équipement utilisateur (300a:300K) doit être desservi par quel point de transmission et de réception (110a:110M) est déterminé également sur la base des informations de trafic.

7. Procédé selon la revendication 1, le procédé comprenant en outre :

l'obtention (S108) d'informations de précision, dans lequel les informations de précision concernent un niveau de précision d'estimation de canal de l'équipement utilisateur (300a:300K) telle qu'effectuée par chacun des points de transmission et de réception (110a:110M), et

dans lequel quel équipement utilisateur (300a:300K) doit être desservi par quel point de transmission et de réception (110a:110M) est déterminé également sur la base des informations de précision.

8. Procédé selon la revendication 1, dans lequel chaque équipement utilisateur (300a:300K) qui doit participer au processus d'apprentissage fédéré par voie hertzienne est configuré pour réaliser un entraînement sur un ensemble de données local dans le cadre du processus d'apprentissage fédéré par voie hertzienne, le procédé comprenant en outre :

l'obtention (S110) d'informations d'importance d'ensemble de données provenant de l'équipement utilisateur (300a:300K), dans lequel les informations d'importance d'ensemble de données concernent un niveau d'unicité pour chaque ensemble de données local, et

dans lequel quel équipement utilisateur (300a:300K) doit être desservi par quel point de transmission et de réception (110a:110M) est déterminé également sur la base des informations d'importance d'ensemble de données.

9. Procédé selon la revendication 1, dans lequel, avant la détermination de quel équipement utilisateur (300a:300K) doit être desservi par quel point de transmission et de réception (110a:110M), les équipements utilisateurs (300a:300K) sont desservis par des points de transmission et de réception (110a:110M) initiaux dans l'ensemble de points de transmission et de réception (110a:110M), et

dans lequel quel équipement utilisateur (300a:300K) doit être desservi par quel point de transmission et de réception (110a:110M) est déterminé selon un critère de transfert intercellulaire pour réduire un nombre de transferts intercellulaires à partir des points de transmission et de réception (110a:110M) initiaux.

10. Procédé selon la revendication 1, dans lequel chacun des points de transmission et de réception (110a:110M) possède une capacité de traitement pour participer au processus d'apprentissage fédéré par voie hertzienne, et

dans lequel quel équipement utilisateur (300a:300K) doit être desservi par quel point de transmission et de réception (110a:110M) est déterminé sur la base de la capacité de traitement de chaque point de transmission et de réception (110a:110M).

11. Procédé selon la revendication 1, dans lequel quel équipement utilisateur (300a:300K) doit être desservi par quel point de transmission et de réception (110a:110M) est déterminé selon un critère de sélection pour réduire un nombre total de points de transmission et de réception (110a:110M) nécessaires pour desservir l'équipement utilisateur (300a:300K).

12. Procédé d'assistance à la détermination de point de transmission et de réception de desserte (110a) pour un équipement utilisateur (300a:300K) participant à un processus d'apprentissage fédéré par voie hertzienne, le procédé étant réalisé par l'équipement utilisateur (300a:300K), le procédé comprenant :

la fourniture (S202), vers un nœud de réseau (200), de mesures radio effectuées par l'équipement utilisateur (300a:300K) sur des signaux de référence de liaison descendante transmis par des points de transmission et de réception (110a:110M) ;

la fourniture (S204) d'une indication vers le nœud de réseau (200) selon laquelle l'équipement utilisateur (300a:300K) doit participer au processus d'apprentissage fédéré par voie hertzienne avec un serveur de paramètres via l'un des points de transmission et de réception (110a:110M) ; et

l'obtention (S208), à partir du nœud de réseau (200), d'une indication de celui des points de transmission et de réception (110a:110M) qui doit desservir l'équipement utilisateur (300a:300K) lorsque le processus d'apprentissage fédéré par voie hertzienne est réalisé.

13. Procédé selon la revendication 12, dans lequel l'équipement utilisateur (300a:300K) est configuré pour réaliser un entraînement sur un ensemble de données local dans le cadre du processus d'apprentissage fédéré par voie hertzienne, et dans lequel le procédé comprend en outre :

la fourniture (S206) d'informations d'importance d'ensemble de données vers le nœud de réseau (200), dans lequel les informations d'importance d'ensemble de données concernent un niveau d'unicité de l'ensemble de données local.

14. Nœud de réseau (200) pour déterminer des points de transmission et de réception de desserte (110a:110M) pour un équipement utilisateur (300a:300K) participant à un processus d'apprentissage fédéré par voie hertzienne, le nœud de réseau (200) comprenant une circuiterie de traitement (210), la circuiterie de traitement étant configurée pour amener le nœud de réseau (200) à :

obtenir des informations de qualité de signal pour chaque équipement utilisateur (300a:300K) dans un ensemble d'équipements utilisateurs (300a:300K), dans lequel les informations de qualité de signal concernent une qualité de signal respective entre chaque paire d'équipement utilisateur (300a:300K) et de point de transmission et de réception (110a:110M) pour un ensemble de points de transmission et de réception (110a:110M) ;

obtenir une indication provenant de chaque équipement utilisateur (300a:300K), dans lequel l'indication provenant d'un équipement utilisateur (300a:300K) donné concerne le fait que ledit équipement utilisateur (300a:300K) donné doit ou non participer au processus d'apprentissage fédéré par voie hertzienne avec un serveur de paramètres via l'un des points de transmission et de réception (110a:110M) ; et

déterminer quel équipement utilisateur (300a:300K) doit être desservi par quel point de transmission et de réception (110a:110M) lorsque le processus d'apprentissage fédéré par voie hertzienne est réalisé sur la base des informations de qualité de signal obtenues pour chaque équipement utilisateur (300a:300K) et des indications obtenues provenant de tous les équipements utilisateurs (300a:300K).

15. Équipement utilisateur (300a:300K) pour assister la détermination de point de transmission et de réception de desserte (110a) pour que l'équipement utilisateur (300a:300K) participe à un processus d'apprentissage fédéré par voie hertzienne, l'équipement utilisateur (300a:300K) comprenant une circuiterie de traitement (310), la circuiterie de traitement étant configurée pour amener l'équipement utilisateur (300a:300K) à :

fournir, vers un nœud de réseau (200), des mesures radio effectuées par l'équipement utilisateur (300a:300K) sur des signaux de référence de liaison descendante transmis par des points de transmission et de réception (110a:110M) ;

fournir d'une indication vers le nœud de réseau (200) selon laquelle l'équipement utilisateur (300a:300K) doit participer au processus d'apprentissage fédéré par voie hertzienne avec un serveur de paramètres via l'un des points de transmission et de réception (110a:110M) ; et

obtenir, à partir du nœud de réseau (200), une indication de celui des points de transmission et de réception (110a:110M) qui doit desservir l'équipement utilisateur (300a:300K) lorsque le processus d'apprentissage fédéré par voie hertzienne est réalisé.

Fig. 1

Fig. 2

S102
Obtain signal quality information

S104
Obtain indication for UEs to participate in over-the-air
federated learning process

S106
Obtain traffic information

S108
Obtain accuracy information

S110
Obtain dataset importance information

S112
Determine which TRPs to serve which UEs

S114
Initiate first handover

S116
Initiate second handover

Fig. 3

```
┌─────────────────────────────────────────────────────┐
│                       S202                          │
│              Provide radio measurements             │
└─────────────────────────────────────────────────────┘
                           │
                           ▼
┌─────────────────────────────────────────────────────┐
│                       S204                          │
│   Provide indication that UE is to participate in   │
│       over-the-air federated learning process       │
└─────────────────────────────────────────────────────┘
                           │
                           ▼
┌ ─ ─ ─ ─ ─ ─ ─ ─ ─ ─ ─ ─ ─ ─ ─ ─ ─ ─ ─ ─ ─ ─ ─ ─ ─ ┐
                          S206
│      Provide dataset importance information         │
└ ─ ─ ─ ─ ─ ─ ─ ─ ─ ─ ─ ─ ─ ─ ─ ─ ─ ─ ─ ─ ─ ─ ─ ─ ─ ┘
                           │
                           ▼
┌─────────────────────────────────────────────────────┐
│                       S208                          │
│           Obtain indication of serving TRP          │
└─────────────────────────────────────────────────────┘
                           │
                           ▼
┌ ─ ─ ─ ─ ─ ─ ─ ─ ─ ─ ─ ─ ─ ─ ─ ─ ─ ─ ─ ─ ─ ─ ─ ─ ─ ┐
                          S210
│              Perform first handover                 │
└ ─ ─ ─ ─ ─ ─ ─ ─ ─ ─ ─ ─ ─ ─ ─ ─ ─ ─ ─ ─ ─ ─ ─ ─ ─ ┘
                           │
                           ▼
┌ ─ ─ ─ ─ ─ ─ ─ ─ ─ ─ ─ ─ ─ ─ ─ ─ ─ ─ ─ ─ ─ ─ ─ ─ ─ ┐
                          S212
│             Perform second handover                 │
└ ─ ─ ─ ─ ─ ─ ─ ─ ─ ─ ─ ─ ─ ─ ─ ─ ─ ─ ─ ─ ─ ─ ─ ─ ─ ┘
```

Fig. 4

Fig. 5

Fig. 6

Fig. 7

Fig. 8

310
Processing
circuitry

320
Comm.
interface

330
Storage
medium

1110b

300a:300K

**Fig. 9**

310a
Provide

310b
Provide

310c
Provide

310d
Obtain

310e
Handover

310f
Handover

300a:300K

**Fig. 10**

1110a,
1110b

1120a,
1120b

1130

**Fig. 11**

Fig. 12

Fig. 13

**EP 4 602 866 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018127290 A1
- US 2022116764 A1